# EUROPÄISCHE PATENTANMELDUNG

(11) **EP 3 954 633 A1**
(43) Veröffentlichungstag der Anmeldung: **16.02.2022**
(21) Anmeldenummer: 21181204.5
(22) Anmeldetag: 23.06.2021
(51) Int. Cl.: B65G 1/04

(54) **LAGER- UND ENTNAHMESYSTEM SOWIE VERFAHREN ZUM BETREIBEN EINES LAGER- UND ENTNAHMESYSTEMS**

(30) Priorität: 14.08.2020 DE 102020210390
(71) Anmelder: Gebhardt Fördertechnik GmbH, D-74889 Sinsheim (DE)
(72) Erfinder: Gebhardt, Marco, 74889 Sinsheim (DE)
(74) Vertreter: Ullrich & Naumann PartG mbB

(57) **Zusammenfassung**

Im Hinblick auf eine besonders hohe Leistung mit konstruktiv einfachen Mitteln ist ein Lager- und Entnahmesystem mit einem Lagerbereich (1) und einem dem Lagerbereich (1) zugeordneten Förderbereich (2), wobei dem Lagerbereich (1) mindestens ein Transportmittel (3) für Transportgüter (4) und dem Förderbereich (2) mindestens ein Fördermittel (6) für Transportgüter (4) zugeordnet ist, derart ausgestaltet und weitergebildet, dass ein Transportfluss des mindestens einen Transportmittels (3) des Lagerbereichs (1) von einem Förderfluss des mindestens einen Fördermittels (6) des Förderbereichs (2) hinsichtlich der Transportgüter (4) mittels eines Entkopplungselements (8) entkoppelt ist. Des Weiteren ist ein entsprechendes Verfahren zum Betreiben eines Lager- und Entnahmesystems angegeben.

## Beschreibung

Die Erfindung betrifft ein Lager- und Entnahmesystem mit einem Lagerbereich und einem dem Lagerbereich zugeordneten Förderbereich, wobei dem Lagerbereich mindestens ein Transportmittel für Transportgüter und dem Förderbereich mindestens ein Fördermittel für Transportgüter zugeordnet ist.

Des Weiteren betrifft die vorliegende Erfindung ein Verfahren zum Betreiben eines Lager- und Entnahmesystems, wobei das Lager- und Entnahmesystem einen Lagerbereich und einen dem Lagerbereich zugeordneten Förderbereich aufweist und wobei dem Lagerbereich mindestens ein Transportmittel für Transportgüter und dem Förderbereich mindestens ein Fördermittel für Transportgüter zugeordnet ist.

Aus der WO 2019/238687 A1 ist bereits ein derartiges Lager- und Entnahmesystem mit einem Lagerbereich und einem dem Lagerbereich zugeordneten Förderbereich bekannt. Dem Lagerbereich ist ein Transportmittel in Form eines auf dem Lagerbereich fahrenden Roboters zugeordnet. Dem Förderbereich ist ein Fördermittel in Form eines darunter fahrenden fahrerlosen Transportsystems zugeordnet. Mit dem Roboter und dem fahrerlosen Transportsystem können Transportgüter von dem Lagerbereich in den Förderbereich und von dem Förderbereich in den Lagerbereich transportiert werden. Insoweit zeigt dieses Dokument auch bereits ein bekanntes Verfahren zum Betreiben eines Lager- und Entnahmesystems.

Bei dem bekannten Lager- und Entnahmesystem und bei dem entsprechenden Verfahren zum Betreiben eines derartigen Lager- und Entnahmesystems ist problematisch, dass bei einer effizienten Übergabe eines Transportguts vom Transportmittel zum Fördermittel oder umgekehrt ein Transportfluss des Transportmittels, d. h. eine Abfolge von Transportaufgaben mit entsprechenden Verfahrbewegungen des Transportmittels, die das Transportmittel zu erfüllen hat, und ein Förderfluss des Fördermittels, d. h. eine Abfolge von Förderaufgaben mit entsprechenden Bewegungen des Fördermittels, die das Fördermittel zu erfüllen hat, aufeinander abgestimmt werden müssen, um sowohl das Transportmittel als auch das Fördermittel zeitgleich am selben Ort zu haben, sodass eine sichere Übergabe des Transportguts zwischen Transportmittel und Fördermittel erfolgen kann. Der Transportfluss und der Förderfluss hängen direkt voneinander ab. Bei dem oben genannten bekannten System sind also der Transportfluss und der Förderfluss des Roboters und des fahrerlosen Transportsystems exakt aufeinander abzustimmen. Dies ist in der Praxis häufig nur bedingt möglich oder erfordert einen sehr hohen Aufwand hinsichtlich der Planung des Transportflusses und des Förderflusses. Bei sowohl dem Transportmittel als auch dem Fördermittel können Blockierungen auf dem geplanten Weg oder die Notwendigkeit für Ausweichrouten vorkommen, die die Dauer der Fahrt auf einer bestimmten Transportstrecke oder Förderstrecke beeinflussen kann. Dabei kann es sein, dass das Transportmittel zu spät ist, was dazu führt, dass das Fördermittel warten muss. Umgekehrt kann das Fördermittel zu spät sein, was dazu führt, dass das Transportmittel warten muss. Jede Komponente und jedes Gerät im Lager- und Entnahmesystem, nicht nur die direkt beteiligten Komponenten und Geräte, können Fehler oder Störungen erleiden, was Einfluss auf alle anderen Systemkomponenten und -geräte haben kann. Hierdurch wird die Leistung des gesamten Lager- und Entnahmesystem reduziert.

Systeme des Stands der Technik werden in der Regel von einer zentralen Instanz gesteuert, die die Bewegungsabläufe koordiniert.

Insbesondere bei fahrerlosen Transportsystemen, die nicht einer festen Route/Linie folgen, sondern frei im Raum navigieren und ggf. Hindernissen ausweichen, ist die Berechnung der Wegstrecke im Vorhinein nur schwer möglich. Mit der Anzahl der Verkehrsteilnehmer steigt die Wahrscheinlichkeit von Blockierungen oder Ausweichmanövern. Damit steigt die Komplexität der Steuerung.

Der vorliegenden Erfindung liegt daher die Aufgabe zugrunde, ein Lager- und Entnahmesystem sowie ein Verfahren zum Betreiben eines derartigen Lager- und Entnahmesystems anzugeben, wonach eine besonders hohe Leistung mit konstruktiv einfachen Mitteln ermöglicht ist.

Erfindungsgemäß wird die voranstehende Aufgabe durch ein Lager- und Entnahmesystem mit den Merkmalen des Anspruchs 1 sowie durch ein Verfahren zum Betreiben eines Lager- und Entnahmesystems mit den Merkmalen des Anspruchs 13 gelöst.

Danach ist das erfindungsgemäße Lager- und Entnahmesystem gemäß Anspruch 1 derart ausgestaltet und weitergebildet, dass ein Transportfluss des mindestens einen Transportmittels des Lagerbereichs von einem Förderfluss des mindestens einen Fördermittels des Förderbereichs hinsichtlich der Transportgüter mittels eines Entkopplungselements entkoppelt ist.

Des Weiteren ist das erfindungsgemäße Verfahren zum Betreiben eines Lager- und Entnahmesystems gemäß Anspruch 13 derart ausgestaltet und weitergebildet, dass ein Transportfluss des mindestens einen Transportmittels des Lagerbereichs von einem Förderfluss des mindestens einen Fördermittels des Förderbereichs hinsichtlich der Transportgüter mittels eines Entkopplungselements entkoppelt wird.

In erfindungsgemäßer Weise ist zunächst erkannt worden, dass durch geschickte Beeinflussung des Transportflusses des mindestens einen Transportmittels und des Förderflusses des mindestens einen Fördermittels die voranstehende Aufgabe auf überraschend einfache Weise gelöst wird. Hierzu ist in weiter erfindungsgemäßer Weise ganz konkret ein Entkopplungselement realisiert, das den Transportfluss des mindestens einen Transportmittels von dem Förderfluss des mindestens einen Fördermittels entkoppelt. Durch eine derartige Entkopplung können die Prozesse des Transportflusses und des Förderflusses robuster gestaltet werden, da die direkte Abhängigkeit - wie im Stand der Technik - nicht mehr gegeben ist. Sowohl der Transportfluss als auch der Förderfluss können auf die individuellen Transportaufgaben bzw. Förderaufgaben des Transportmittels bzw. des Fördermittels abgestimmt und individuell optimiert werden, ohne dass der Transportfluss und der Förderfluss auch noch aufeinander abgestimmt werden müssen, um eine sichere Übergabe eines Transportguts zu ermöglichen. Eine derartige durch das Entkopplungselement bereitgestellte Entkopplung kann wie eine Pufferung funktionieren, mit der von dem Transportmittel oder Fördermittel bereits bereitgestelltes Transportgut vor seiner Übergabe an das Fördermittel bzw. Transportmittel zwischengelagert oder gepuffert werden kann, bis das Fördermittel bzw. Transportmittel zur Übernahme des Transportguts bereit ist. Hierdurch kann eine besonders gute Auslastung des Transportmittels und/oder des Fördermittels und damit eine hohe Leistung des Lager- und Entnahmesystem bereitgestellt werden. Eine Entkopplung einzelner Systeme - bspw. mechanisch über Förderer und/oder steuerungstechnisch - bringt eine Komplexitätsreduktion.

Folglich sind mit dem erfindungsgemäßen Lager- und Entnahmesystem und dem erfindungsgemäßen Verfahren zum Betreiben eines Lager- und Entnahmesystems ein Lager- und Entnahmesystem und ein Verfahren bereitgestellt, wonach eine besonders hohe Leistung mit konstruktiv einfachen Mitteln ermöglicht ist.

In ganz konkreter vorteilhafter Weise kann das Entkopplungselement derart ausgebildet sein, dass eine zeitliche und/oder räumliche Entkopplung einer Übergabe mindestens eines Transportguts zwischen dem mindestens einen Transportmittel und dem mindestens einen Fördermittel ermöglicht ist. Mit einer zeitlichen Entkopplung wird die Übergabe zeitlich auseinandergezogen, wobei hierbei das Entkopplungselement eine Zwischenlagerung durchführen kann. Bei einer räumlichen Entkopplung wird der Übergabepunkt quasi zweigeteilt, wobei die Abgabe des Transportguts von dem Transportmittel bzw. Fördermittel und die Übernahme des Transportguts durch das Fördermittel bzw. Transportmittel an unterschiedlichen Orten stattfinden. Es gibt hierdurch quasi einen Abgabepunkt und einen hiervon räumlich beabstandeten Annahmepunkt. Eine besonders hohe Leistung des Lager- und Entnahmesystem ist bei einer zeitlichen und/oder räumlichen Entkopplung bereitgestellt.

In konstruktiv besonders einfacher Weise kann das Entkopplungselement zwischen dem Lagerbereich und dem Förderbereich angeordnet sein. Hierdurch kann sowohl eine zeitliche als auch eine räumliche Entkopplung des Transportflusses von dem Förderfluss realisiert werden.

Je nach individueller Anforderung kann das mindestens eine Transportmittel unterschiedliche Geräte aufweisen oder unterschiedlich ausgestaltet sein. Im Hinblick auf eine besonders wichtige Anwendung kann das mindestens eine Transportmittel einen Transportroboter aufweisen. Ein derartiger Transportroboter bildet häufig einen Bestandteil eines Blocklagers und dient zur Realisierung einer hohen Leistung des gesamten Lager- und Entnahmesystems.

In gleicher Weise kann je nach individueller Anforderung das mindestens eine Fördermittel - vorzugsweise in Abstimmung mit dem mindestens einen Transportmittel des Lagerbereichs - unterschiedliche Geräte aufweisen oder unterschiedlich ausgestaltet sein. Dabei kann das mindestens eine Fördermittel in konkreter und einfacher Weise ein fahrerloses Transportsystem, ein fahrerloses Transportfahrzeug, eine Lastaufnahmeeinrichtung, einen Senkrechtförderer, eine Lagerbehälter-Hebevorrichtung, einen Sorter, ein Regalbediengerät, ein Shuttle, einen Verfahrwagen, eine Hängebahn, einen Taschensorter, ein Hubbalkenlager, ein Verschieberegal, ein AV, Automated Vehicle, ein AGV, Automated Guided Vehicle, ein AMR, Autonomous Mobile Robot, und/oder eine Drohne aufweisen.

Das erfindungsgemäße Lager- und Entnahmesystem kann derart ausgestaltet sein, dass sich an den Förderbereich ein weiteres Funktionselement des Lager- und Entnahmesystems anschließt, vorzugsweise ein weiterer Lagerbereich oder weiterer Förderbereich. Bei einer derartigen Ausgestaltung kommt die vorliegende Erfindung besonders stark zur Geltung und ein entsprechend ausgestaltetes Lager- und Entnahmesystem sowie Verfahren zum Betreiben eines Lager- und Entnahmesystems können besonders effektiv und mit besonders hoher Leistung arbeiten. Dabei können zwei voneinander unabhängige Elemente wie der Lagerbereich und das sich an den Förderbereich anschließende weitere Funktionselement besonders sicher entkoppelt und mit besonders hoher Leistung - da über das Entkopplungselement sicher voneinander entkoppelt - betrieben werden.

Bei einer konkreten und einfachen Ausgestaltung kann das weitere Funktionselement ein fahrerloses Transportsystem, ein fahrerloses Transportfahrzeug, eine Lastaufnahmeeinrichtung, einen Senkrechtförderer, eine Lagerbehälter-Hebevorrichtung, einen Sorter, ein Regalbediengerät, ein Shuttle, einen Verfahrwagen, eine Hängebahn, einen Taschensorter, ein Hubbalkenlager, ein Verschieberegal, ein AV, ein AGV, ein AMR und/oder eine Drohne aufweisen. Bei einem konkreten Ausführungsbeispiel kann ein Transportmittel oder Roboter des Lagerbereichs ein Transportgut über das Entkopplungselement an das Fördermittel oder an Fördertechnik des Förderbereichs übergeben, worauf das Transportgut weiter an das weitere Funktionselement übergeben werden kann. In gleicher Weise kann eine Übergabe des Transportguts von dem weiteren Funktionselement über das Fördermittel oder die Fördertechnik - weiter über das Entkopplungselement - an das Transportmittel oder den Roboter erfolgen.

Je nach Anwendungsfall kann das Entkopplungselement aktiv arbeiten oder zur aktiven Funktionsweise ausgebildet sein. Dabei kann das Entkopplungselement je nach Anwendungsfall beispielsweise ein Stetigförderersystem aufweisen, wobei vorzugsweise das Stetigförderersystem einen Rollenförderer, einen Stauförderer, einen Gurtförderer, einen Riemenförderer und/oder einen Kettenförderer aufweisen kann.

Alternativ hierzu kann das Entkopplungselement passiv arbeiten oder zur passiven Funktionsweise ausgebildet sein. Dabei kann das Entkopplungselement je nach Anwendungsfall eine Rollenbahn, ein Abschiebeblech, einen Kugelrollentisch, einen Allseitenrollentisch und/oder Rollenleisten aufweisen.

Der Einsatz von aktiven oder passiven Entkopplungselementen kann davon abhängig gemacht werden, ob die jeweiligen zu entkoppelnden Partner - beispielsweise Transportfluss eines Transportmittels von dem Förderfluss eines Fördermittels - mit aktiven oder passiven Entkopplungselementen umgehen können oder nicht.

Beispielsweise kann ein fahrerloses Transportsystem ein Transportgut von einem aktiven oder passiven Entkopplungselement aufnehmen, je nachdem wie das fahrerloses Transportsystem ausgestattet ist. Oftmals ist eine aktive Übergabe schneller. Dies gilt auch für den umgekehrten Prozess der Abgabe eines Transportguts an das Entkopplungselement.

Bei einer weiter konkreten Ausgestaltung des Lager- und Entnahmesystems kann das Lager- und Entnahmesystem ein vorzugsweise gridbasiertes Blocklager sein, dass vorzugsweise mit Transportrobotern arbeitet.

In einem intralogistischen System kann die Gesamtkomplexität enorm reduziert und die Robustheit der Prozesse stark erhöht werden, wenn man ein oder mehrere Entkopplungselemente verwendet. Jeder Prozess kann dann in gewissen Grenzen unabhängig vom Ergebnis des anderen Prozesses arbeiten. Die Notwendigkeit einer Synchronität wird reduziert oder gegebenenfalls ganz aufgehoben.

Beispielsweise kann ein Transportroboter ein Transportgut auf einen Rollenförderer abgeben, der das Transportgut eine gewisse vorgebbare Zeit Puffer, bis das nachfolgende Fördermittel oder Förderelement das Transportgut aufnimmt oder aufnehmen kann. Eine Entkopplung oder Pufferung kann je nach Erfordernis in vorgebbarer Weise grundsätzlich von 1 bis n Transportgüter auf dem Entkopplungselement erfolgen, wobei n eine natürliche Zahl ist.

Weitere vorteilhafte Ausgestaltungen von Ausführungsbeispielen des erfindungsgemäßen Lager- und Entnahmesystems sowie des entsprechenden Verfahrens werden im Folgenden erläutert:
- Materialflussrechner (MFR): Um die Belegung mit einem Transportgut eindeutig zu identifizieren kann im Rahmen eines MFRs des Lager- und Entnahmesystems ein Scanner eingesetzt werden, der den eindeutigen Strichcode auf dem Transportgut bei der Übergabe erfasst. Dieser kann sich auf dem Transportmittel oder Entkopplungselement oder auf beiden befinden. Damit kann eine sicher fehlerfreie Übergabe des richtigen Transportguts zwischen den Systemen oder zwischen Lagerbereich und Förderbereich erfolgen. Alternativ kann eine günstigere Lichtschranke feststellen ob das Entkopplungselement belegt ist oder nicht, um den weiteren Transport zu planen. Dabei erfolgt kein direktes Scannen des Behälters, dies erfolgt dann nur indirekt über eine tendenziell fehleranfälligere Materialflussverfolgung.
- Parallelisierung: Durch die Entkopplung können Förder- und Lagerprozesse parallel ablaufen wohingegen ohne Entkopplungselemente enorme Wartezeiten entstehen und die Parallelität der Prozesse abnimmt, was zu einer geringeren Leistung führt.
- Positionierung: Für einen sauberen Prozess ist es entscheidend, dass das Transportmittel sauber positioniert. Dies kann erfolgen mittels QR-Code, Strichcode, Data-Matrix, RFID oder einer optischen Abtastung der Umgebung durch das Transportmittel oder den Roboter, z.B. Erfassen von Löchern oder Kanten am Entkopplungselement. Es gibt eine Patentanmeldung von Ocado mit einem Roboter mit einem RFID-Reader zur Positionierung auf dem Grid (WO 2020/148315 A1). Alternativ könnte auch das Entkopplungselement auf einer der eben benannten Methoden erfassen, ob der Roboter sauber positioniert ist und diese Information an den Roboter übermitteln.
- Steuerungskonzept: Die Steuerung zwischen Transportmittel und Entkopplungselement kann zentral über eine übergeordnete Steuerung erfolgen. Alternativ kann diese dezentral erfolgen, indem z.B. das ankommende Transportmittel lokal die Steuerung des Entkopplungselements dezentral aktiviert - ohne zentrale Steuerung. Der Datenaustausch wird häufig als "Handshake" bezeichnet und beinhaltet verschiedenen Inhalte, wie den Zustand - an, aus, Stand-by -, Funktionsfähigkeit - defekt, funktionsfähig -, Sensordaten - belegt, frei, bei Scanner auch z.B. Transportgutnummer -, Motor - aktiviert, deaktiviert, Dynamik des Motors. Einer oder mehrere dieser Daten oder Inhalte können bedeutsam für die Zusammenarbeit der zwei eigenständigen Systeme, bspw. Lagerbereich und Förderbereich, sein, wenn das Ladegut oder Transportgut sich teilweise auf dem Transportmittel und Entkopplungselement befindet, aber zeitgleich mit gleicher Geschwindigkeit gefördert werden muss.
   ∘ Steuerungsalternativen: Das Entkopplungselement kann an eine zentrale Steuerung angeschlossen sein. Eine solche Steuerung steuert damit viele Elemente. Vorteil: weniger Steuerungen im Gesamtsystem, zentrale Software; Nachteil: lange, teure Kabelwege, Zykluszeit der Steuerung, komplexe Software. Eine dezentrale Variante hat eine eigene Steuerung und kann schon im Werk in Betrieb genommen werden. Keine zentrale Software notwendig, Plug and Play-fähig. Mit der dezentralen Variante kann das Gesamtsystem modularer aufgebaut werden. Das vereinfacht die Planung und die Inbetriebnahme vor Ort.
   ∘ Optionaler dezentraler Aufbau: Gridsteuerung fragt dezentrales Entkopplungselement an, ob Behälter oder Transportgut abgesetzt werden kann, bei Freigabe setzt Roboter Behälter oder Transportgut ab. Überlagerte Steuerung schickt FTS, fahrerloses Transportsystem, zu Entkopplungselement, FTS fragt Entkopplungselement, ob bereit zur Übergabe, falls ja, Behälter oder Transportgut wird transferiert. Bei Einlagerung umgekehrt. Überlagerte Steuerung schickt FTS an Entkopplungselement, welches Übergabe anfragt usw. Entkopplungselement meldet übergabebereiten Behälter oder Transportgut an Gridsteuerung → diese schickt Roboter, Anfrage bei Entkopplungselement, ob Behälter oder Transportgut abgeholt werden kann → Übergabe. Die Behälter ID ist entweder Teil der Schnittstelle oder jedes dezentrale Element hat einen Barcode-Leser etc. Im dezentralen Modus weiß das Element, wie viele Pufferplätze etc. es hat, und teilt die Information mit den anderen Systemkomponenten inkl. deren Belegung -für jedes Element z.B. eine XML/AutomationML Datei, die die Eigenschaften und Fähigkeiten beschreibt.
- Zentrierung auf dem Entkopplungselement: Der Gridstore-Roboter oder das Transportmittel setzt von oben auf das Entkopplungselement ab, je nach nachfolgenden Positionieranforderungen könnte der Gridstore-Roboter oder das Transportmittel das Fördergut in einen Trichter absetzen. Umgekehrt ist der Roboter recht empfindlich, was die Aufnahme des Förderguts oder Transportguts angeht. Zur exakten Positionierung kann das Fördergut oder Transportgut bspw. durch seitlich angebrachte Mittel zentriert werden, damit der Greifer von oben exakt greifen kann. Wenn das Element aktiv ist, kann die notwendige Kraft vom Mittel selbst aufgebracht werden. Bei einem passiven Element müsste es das Fördermittel mittels der Schwerkraft machen.
- Speicher-/Pufferfunktionalität: Das Entkopplungselement kann Fördergüter oder Transportgüter puffern und ggf. in Sequenz oder Reihenfolge abgeben. Bei einer Rollenbahn wäre eine Sequenz nur möglich bei der Einlagerung, wenn die Gridroboter von oben auf mehrere Positionen der Rollenbahn zugreifen können. Die Abgabe zum z.B. FTS hin kann mit der Rollenbahn jedoch nur in der Reihenfolge erfolgen, wie die Behälter am Ende der Rollenbahn ankommen. Mit einem Gridsorter oder einem vertikalen Puffer - Sequenzpuffer - bzw. einer Fördertechnik mit abzweigenden Pufferplätzen könnte man auch einen Einzelzugriff auf die Fördergüter oder Transportgüter erzielen.
- Anzahl E-/A-Stellen, Ein-/Ausgang-Stellen: min. 1 wenn reversierbar bis n Ein-/Ausgänge, E/A, die reversierbar sein können oder getrennt nur der Einlagerung oder nur der Auslagerung dienen. Reversierbare Entkopplungsmittel oder Entkopplungselemente sind bzgl. Leistung schlechter als getrennte Ein-/Ausgänge.

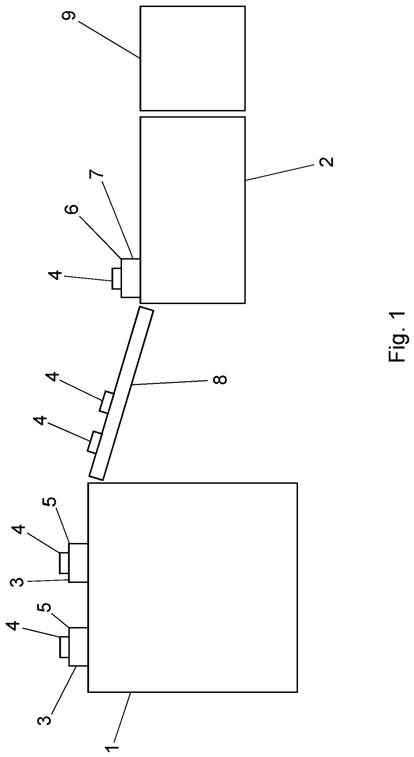

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele des erfindungsgemäßen Lager- und Entnahmesystems sowie des erfindungsgemäßen Verfahrens anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigt
- Fig. 1: in schematischen Darstellung ein Ausführungsbeispiel des erfindungsgemäßen Lager- und Entnahmesystem.

Fig. 1 zeigt in einer schematischen Darstellung ein Ausführungsbeispiel des erfindungsgemäßen Lager- und Entnahmesystem, wobei das Lager- und Entnahmesystem einen als Blocklager ausgebildeten Lagerbereich 1 und einen dem Lagerbereich 1 zugeordneten Förderbereich 2 aufweist. Dem Lagerbereich sind mehrere Transportmittel 3 für Transportgüter 4 zugeordnet. Dabei sind die Transportmittel 3 als Transportroboter 5 realisiert. Dem Förderbereich 2 ist ein Fördermittel 6 in Form eines fahrerlosen Transportsystems oder Shuttle 7 zugeordnet.

Im Hinblick auf eine besonders hohe Leistung des Lager- und Entnahmesystem ist ein Transportfluss der Transportroboter 5 von einem Förderfluss des Shuttle 7 mittels eines Entkopplungselements 8 entkoppelt. Das Entkopplungselement 8 ist als Stetigförderersystem ausgebildet. Auf dem Entkopplungselement 8 sind zwei Transportgüter 4 gezeigt, beispielsweise Behälter für beliebige Gegenstände. Die Übergabe dieser beiden Transportgüter 4 von dem Transportroboter 5 zu dem Shuttle 7 ist mittels des Entkopplungselements 8 zeitlich und räumlich entkoppelt. Die Transportroboter 5 können nach der Abgabe der Transportgüter 4 auf das Entkopplungselement 8 neue oder weitere Transportaufgaben übernehmen, ohne sich weiter um diese beiden Transportgüter 4 kümmern zu müssen. In gleicher Weise kann das Shuttle 7 noch beliebige Förderaufgaben durchführen, bevor es die beiden Transportgüter 4 aufnehmen und fördern muss. Hierdurch ist quasi eine Pufferung der beiden Transportgüter 4 auf dem Entkopplungselement 8 realisiert. Die Transportflüsse der Transportroboter 5 und der Förderfluss des Shuttles 7 sind mittels des Entkopplungselements 8 voneinander entkoppelt.

Grundsätzlich kann ein Entkopplungselement 8 als passives oder aktives Entkopplungselement 8 ausgebildet sein. Hierbei ist auf den jeweiligen Anwendungsfall abzustellen.

An den Förderbereich 2 schließt sich ein weiteres Funktionselement 9 des Lager- und Entnahmesystems an. Das weitere Funktionselement 9 kann ein weiterer Lagerbereich oder weiterer Förderbereich sein.

Hinsichtlich weiterer vorteilhafter Ausgestaltungen des erfindungsgemäßen Lager- und Entnahmesystem sowie des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Lagerbereich
- 2: Förderbereich
- 3: Transportmittel
- 4: Transportgut
- 5: Transportroboter
- 6: Fördermittel
- 7: Shuttle
- 8: Entkopplungselement
- 9: weiteres Funktionselement

## Patentansprüche

1. Lager- und Entnahmesystem mit einem Lagerbereich (1) und einem dem Lagerbereich (1) zugeordneten Förderbereich (2), wobei dem Lagerbereich (1) mindestens ein Transportmittel (3) für Transportgüter (4) und dem Förderbereich (2) mindestens ein Fördermittel (6) für Transportgüter (4) zugeordnet ist,
**dadurch gekennzeichnet, dass** ein Transportfluss des mindestens einen Transportmittels (3) des Lagerbereichs (1) von einem Förderfluss des mindestens einen Fördermittels (6) des Förderbereichs (2) hinsichtlich der Transportgüter (4) mittels eines Entkopplungselements (8) entkoppelt ist.

2. Lager- und Entnahmesystem nach Anspruch 1, **dadurch gekennzeichnet, dass** das Entkopplungselement (8) derart ausgebildet ist, dass eine zeitliche und/oder räumliche Entkopplung einer Übergabe mindestens eines Transportguts (4) zwischen dem mindestens einen Transportmittel (3) und dem mindestens einen Fördermittel (6) ermöglicht ist.

3. Lager- und Entnahmesystem nach Anspruch 1 oder 2, **dadurch gekennzeichnet, dass** das Entkopplungselement (8) zwischen dem Lagerbereich (1) und dem Förderbereich (2) angeordnet ist.

4. Lager- und Entnahmesystem nach einem der Ansprüche 1 bis 3, **dadurch gekennzeichnet, dass** das mindestens eine Transportmittel (3) einen Transportroboter (5) - vorzugsweise eines Blocklagers - aufweist.

5. Lager- und Entnahmesystem nach einem der Ansprüche 1 bis 4, **dadurch gekennzeichnet, dass** das mindestens eine Fördermittel (6) ein fahrerloses Transportsystem, ein fahrerloses Transportfahrzeug, eine Lastaufnahmeeinrichtung, einen Senkrechtförderer, eine Lagerbehälter-Hebevorrichtung, einen Sorter, ein Regalbediengerät, ein Shuttle (7), einen Verfahrwagen, eine Hängebahn, einen Taschensorter, ein Hubbalkenlager, ein Verschieberegal, ein AV, ein AGV, ein AMR und/oder eine Drohne aufweist.

6. Lager- und Entnahmesystem nach einem der Ansprüche 1 bis 5, **dadurch gekennzeichnet, dass** sich an den Förderbereich (2) ein weiteres Funktionselement (9) des Lager- und Entnahmesystems anschließt, vorzugsweise ein weiterer Lagerbereich oder weiterer Förderbereich.

7. Lager- und Entnahmesystem nach Anspruch 6, **dadurch gekennzeichnet, dass** das weitere Funktionselement (9) ein fahrerloses Transportsystem, ein fahrerloses Transportfahrzeug, eine Lastaufnahmeeinrichtung, einen Senkrechtförderer, eine Lagerbehälter-Hebevorrichtung, einen Sorter, ein Regalbediengerät, ein Shuttle, einen Verfahrwagen, eine Hängebahn, einen Taschensorter, ein Hubbalkenlager, ein Verschieberegal, ein AV, ein AGV, ein AMR und/oder eine Drohne aufweist.

8. Lager- und Entnahmesystem nach einem der Ansprüche 1 bis 7, **dadurch gekennzeichnet, dass** das Entkopplungselement (8) aktiv arbeitet.

9. Lager- und Entnahmesystem nach Anspruch 8, **dadurch gekennzeichnet, dass** das Entkopplungselement (8) ein Stetigförderersystem aufweist, wobei vorzugsweise das Stetigförderersystem einen Rollenförderer, einen Stauförderer, einen Gurtförderer, einen Riemenförderer und/oder einen Kettenförderer aufweist.

10. Lager- und Entnahmesystem nach einem der Ansprüche 1 bis 7, **dadurch gekennzeichnet, dass** das Entkopplungselement (8) passiv arbeitet.

11. Lager- und Entnahmesystem nach Anspruch 10, **dadurch gekennzeichnet, dass** das Entkopplungselement (8) eine Rollenbahn, ein Abschiebeblech, einen Kugelrollentisch, einen Allseitenrollentisch und/oder Rollenleisten aufweist.

12. Lager- und Entnahmesystem nach einem der Ansprüche 1 bis 11, **dadurch gekennzeichnet, dass** das Lager- und Entnahmesystem ein vorzugsweise gridbasiertes Blocklager ist.

13. Verfahren zum Betreiben eines Lager- und Entnahmesystems, vorzugsweise eines Lager- und Entnahmesystems nach einem der Ansprüche 1 bis 12, wobei das Lager- und Entnahmesystem einen Lagerbereich (1) und einen dem Lagerbereich (1) zugeordneten Förderbereich (2) aufweist und wobei dem Lagerbereich (1) mindestens ein Transportmittel (3) für Transportgüter (4) und dem Förderbereich (2) mindestens ein Fördermittel (6) für Transportgüter (4) zugeordnet ist,
**dadurch gekennzeichnet, dass** ein Transportfluss des mindestens einen Transportmittels (3) des Lagerbereichs (1) von einem Förderfluss des mindestens einen Fördermittels (6) des Förderbereichs (2) hinsichtlich der Transportgüter (4) mittels eines Entkopplungselements (8) entkoppelt wird.
